# EUROPÄISCHE PATENTSCHRIFT

(11) **EP 2 423 016 B1**
(45) Veröffentlichungstag und Bekanntmachung des Hinweises auf die Patenterteilung: **28.09.2016**
(21) Anmeldenummer: 11175702.7
(22) Anmeldetag: 28.07.2011
(51) Int. Cl.: B60H 1/00

(54) **Vorrichtung zur Mischung zweier Luftströme**
Device for mixing two air flows
Dispositif de mélange de deux flux d'air

(30) Priorität: 24.08.2010 DE 102010039674
(43) Veröffentlichungstag der Anmeldung: 29.02.2012
(73) Patentinhaber: MAHLE Behr GmbH & Co. KG, 70469 Stuttgart (DE)
(72) Erfinder: Laux, Holger, 78661 Dietingen (DE)
(74) Vertreter: Grauel, Andreas

(56) Entgegenhaltungen:
- DE-A1-102007 048 331
- US-A1- 2008 083 241
- US-B1- 6 368 207

## Beschreibung

Die vorliegende Erfindung bezieht sich auf eine Vorrichtung zur Mischung zweier Luftströme zur Temperierung eines Fahrzeugs.

Zur Vermischung von Kalt- und Warmluft in einem Klimagerät eines Fahrzeugs werden Finger in einem Mischmodul oder runde Stege im Kaltweg eingesetzt Dies führt zu einem unerwünschten Druckabfall im Kaltweg. Zudem findet eher eine Luftverteilung oder ein Luftkreuzen anstelle eines Vermischens der Luft statt.

Die US 6 368 207 B1 beschreibt ein Gehäuse einer Klimatisierungseinrichtung eines Fahrzeugs. Das Gehäuse weist eine besondere Struktur auf, die eine Vermischung von Kaltluft und Warmluft unterstützt.

Die US 2008/0083241 A1 offenbart ein Klimagerät mit einer Vorrichtung zur Mischung zweier Luftströme, zur Temperierung eines Fahrzeugs, mit einem ersten Luftkanal zum Führen eines ersten Luftstroms, mit einem zweiten Luftkanal zum Führen eines zweiten Luftstroms und mit einem dritten Luftkanal zum Aufnehmen des ersten Luftstroms aus einer ersten Auslassöffnung des ersten Luftkanals und des zweiten Luftstroms aus einer zweiten Auslassöffnung des zweiten Luftkanal; und mit einer Kanalanordnung, die zumindest zwei benachbart zueinander angeordnete Kanäle aufweist, die sich in einen Übergangsbereich zwischen der ersten Auslassöffnung und der zweiten Auslassöffnung in einen der Luftkanäle hinein erstrecken.

Es ist die Aufgabe der vorliegenden Erfindung eine verbesserte Vorrichtung zur Mischung zweier Luftströme zur Temperierung eines Fahrzeugs zu schaffen und ein Klimagerät mit einer solchen Vorrichtung zu schaffen.

Diese Aufgabe wird durch eine Vorrichtung zur Mischung zweier Luftströme gemäß dem Anspruch 1 gelöst.

Der vorliegenden Erfindung liegt die Erkenntnis zugrunde, dass sich durch den Einsatz von Lamellen eine verbesserte Mischung zweier Luftströme erzielen lässt. Bei den Luftströmen kann es sich um einen Warmluftstrom und einen Kaltluftstrom in einem Klimagerät eines Fahrzeugs handeln.

Somit können Lamellen im Kaltweg als Mischelement eingesetzt werden. Solche Lamellen im Kaltweg ermöglichen eine effiziente und platzsparende Luftmischung in einem Klimagerät.

Vorteilhafterweise kann mittels der Lamellen eine gute Durchmischung auch dann erzielt werden, wenn wenig Bauraum zur Verfügung steht. Bei einem Einsatz in einem herkömmlichen Klimagerät kann durch Einsatz der Lamellen ein Druckabfall im Kaltweg vermieden werden oder auf ein geringes Maß beschränkt werden. Dadurch steht eine große Luftmenge zur Verfügung und es ergibt sich eine gute Akustik. Zudem wird eine sehr kompakte Realisierung ermöglichst. Daher eignet sich der erfindungsgemäße Ansatz insbesondere auch dann, wenn ein extrem kompakter Bauraum zur Verfügung steht. Beispielsweise ist der Bauraum bei einem Einsatz im Fahrzeugbereich insbesondere in Fahrzeuglängsrichtung und Fahrzeughochrichtung beschränkt. Mit Hilfe der Lamellen lässt sich auch unter solchermaßen beschränkten Bedingungen ein Klimagerätekonzept entwerfen, bei dem Regelkurven linear und robust sind und kleine Temperaturschichtungen auftreten.

Die vorliegende Erfindung schafft eine Vorrichtung zur Mischung zweier Luftströme zur Temperierung eines Fahrzeugs, mit folgenden Merkmalen:
einem ersten Luftkanal zum Führen eines ersten Luftstroms;
einem zweiten Luftkanal zum Führen eines zweiten Luftstroms;
einem dritten Luftkanal zum Aufnehmen des ersten Luftstroms aus einer ersten Auslassöffnung des ersten Luftkanals und des zweiten Luftstroms aus einer zweiten Auslassöffnung des zweiten Luftkanals; und
einer Lamellenanordnung, die zumindest zwei benachbart zueinander angeordnete Lamellen aufweist, die sich in einen Übergangsbereich zwischen der ersten Auslassöffnung und der zweiten Auslassöffnung in einen der Luftkanäle hinein erstrecken, wobei die Lamellenanordnung unterschiedlich ausgeformte Lamellen aufweist.

Die Vorrichtung zur Mischung zweier Luftströme kann ein Klimagerät oder ein Teil eines Klimageräts eines Fahrzeugs darstellen. Luft steht dabei stellvertretend für ein Fluid und insbesondere ein Gas. Die Luftströme können unterschiedliche Temperaturen aufweisen. Beispielsweise kann der erste Luftstrom eine niedrigere Temperatur als der zweite Luftstrom aufweisen. Durch Mischen der Luftströme kann ein temperierter Luftstrom erzeugt werden, der beispielsweise in einen Innenraum des Fahrzeugs geleitet werden kann. Die Kanäle können eine beliebige Form aufweisen, die zur Führung der jeweiligen Luftströme geeignet ist. Durch den dritten Kanal kann der temperierte Luftstrom zu einer Mehrzahl unterschiedlicher Auslassöffnungen geleitet werden. Dazu kann der dritte Kanal entsprechende Verzweigungen oder eine entsprechend geeignete Formgebung aufweisen. Die Kanäle können durch separate Elemente ausgeformt werden. Auch können die Kanale Teilbereiche eines Gehäuses darstellen. So kann die Vorrichtung ein Gehäuse aufweisen und der erste und der zweite Kanal können in einem ersten Bereich des Gehäuses angeordnet sein und beispielsweise durch eine Trennwand innerhalb des Gehäuses voneinander getrennt sein. Der dritte Kanal kann in einem an den ersten Bereich angrenzenden zweiten Bereich des Gehäuses angeordnet sein und durch Außenwände des Gehäuses ausgeformt werden. Übergangsbereiche zwischen den Kanälen können fließend sein. Die Lamellen der Lamellenanordnung können an einer Wand des ersten Kanals, des zweiten Kanals oder einer Zwischenwand zwischen dem ersten und dem zweiten Kanal befestigt sein. Alternativ können die Lamellen an einem Wandbereich des dritten Kanals befestigt sein. Insbesondere können die Lamellen in einem Übergangsbereich zwischen dem ersten Kanal und dem zweiten Kanal befestigt sein, so dass sie sich dort befinden, wo der erste Luftstrom auf den zweiten Luftstrom trifft. Somit können die Lamellen eine Grenze zwischen dem ersten und dem zweiten Luftstrom beim Eintreten der Luftströme in den dritten Kanal markieren. Dabei können sich die Lamellen beispielsweise in den dritten Luftkanal, in den zweiten Luftkanal oder in einen Grenzbereich zwischen dem zweiten Luftkanal und dem dritten Luftkanal hinein erstrecken. Die Lamellen können formstabil und beispielsweise aus Kunststoff sein. Beispielsweise können die Lamellen als ebene Streifen ausgeformt sein. Die Lamellen können so gegeneinander ausgerichtet sein, dass ihre Haupterstreckungsflächen in einer gemeinsamen Ebene liegen. Die Lamellenordnung kann beispielsweise zwischen drei und zehn Lamellen aufweisen. Die Lamellenanordnung kann jedoch auch mehr als zehn Lamellen aufweisen.

Beispielsweise können sich die Lamellen ausgehend zumindest etwa von einem Grenzbereich zwischen dem ersten Luftkanal und dem zweiten Luftkanal in den dritten Luftkanal hinein erstrecken. Dabei kann die Anordnung der Lamellen in x-, y-Richtung variieren oder die Lamellen können vorteilhaft auf einer Linie nebeneinander angeordnet sein. Dabei kann der Grenzbereich entlang einer Grenzlinie zwischen der ersten Auslassöffnung des ersten Luftkanals und der zweiten Auslassöffnung des zweiten Luftkanals verlaufen. Die Lamellenanordnung kann parallel zu zumindest einem Abschnitt der Grenzlinie angeordnet sein. Die freien Enden der Lamellen können zumindest annähernd in Strömungsrichtung zumindest eines der Luftströme und annähernd rechtwinklig zu der Strömungsrichtung des anderen der Luftströme zeigen. Seitenbereiche der außenliegenden Lamellen sowie die freien Enden der Lamellen können mit jeweils angrenzenden Kanalwandbereichen abschließen oder davon beabstandet sein. Beispielsweise kann die Lamellenanordnung mittig in Bezug auf eine Breite oder Höhe der Kanäle angeordnet sein und es kann beidseitig der Lamellenanordnung ein Freiraum zu angrenzenden Kanalwandbereichen bestehen, durch die ein Teil des oder der Luftströme strömen kann. Die Länge der Lamellen kann ebenso variieren oder es kann auch bei einem anderen Ausführungsbeispiel vorteilhaft sein, wenn die Lamellen gleich lang sind.

Die Lamellenanordnung kann so angeordnet sein, dass die Lamellen den ersten Luftkanal teilweise verschließen. Dazu können die Lamellen so befestigt sein, das sie quer oder schräg zur Strömungsrichtung des ersten Luftkanals zeigen. Dadurch kann zumindest ein Teil des ersten Luftstroms durch die Lamellenanordnung hindurch strömen und sich auf der anderen Seite der Lamellenanordnung mit dem zweiten Luftstrom vermischen.

Generell können die Lamellen als formstabile Streifen ausgeformt sein. Auf diese Weise können sie ihre Funktionalität auch bei unterschiedlichen Strömungsgeschwindigkeiten der Luftströme beibehalten.

Die unterschiedlich ausgeformten Lamellen können beispielsweise rechteckig sein oder sich zum freien Ende hin verjüngen. Ebenso können die Lamellen runde, eckige oder spitze Endbereiche aufweisen. Durch die Lamellenformen kann das Strömungsverhalten des durch die Lamellenanordnung fließenden oder des an der Lamellenanordnung vorbeifließenden Luftstroms beeinflusst werden. Die Lamellen können in Längsrichtung gebogen bzw. gekrümmt sein oder über die Länge nahezu gerade, wobei sie am Ende abgerundet sind.

Auch kann die Lamellenanordnung in unterschiedlichen Abständen zueinander angeordnete Lamellen aufweisen. Bei einem breiteren Abstand benachbarter Lamellen kann eine größere Luftmenge zwischen den benachbarten Lamellen durchströmen als bei einem geringeren Abstand.

Gemäß einer Ausführungsform kann die Vorrichtung eine Temperiereinrichtung aufweisen, die zum Temperieren des zweiten Luftstroms in dem zweiten Luftkanal angeordnet ist. Die Temperiereinrichtung kann eine Heizung sein.

Ferner kann die Vorrichtung eine Zuführeinrichtung zum Zuführen eines ersten Anteils eines gemeinsamen Eingangsluftstroms als den ersten Luftstrom in den ersten Luftkanal und eines zweiten Anteils des gemeinsamen Eingangsluftstroms als den zweiten Luftstrom in den zweiten Luftkanal aufweisen. Der Eingangsluftstrom kann der Umgebung der Vorrichtung entnommen sein. Beispielsweise kann der Eingangsluftstrom durch einen Verdampfer geführt werden, bevor er den Luftkanälen zugeführt wird.

Auch kann der dritte Kanal zumindest einen Auslass zum Auslassen eines aus dem ersten Luftstrom und dem zweiten Luftstrom erzeugten temperierten Luftstroms aufweisen. Der Auslass kann mit einer Auslassklappe versehen sein und beispielsweise in den Innenraum des Fahrzeugs führen.

Gemäß einer Ausführungsform kann die Vorrichtung einen vierten Luftkanal zum Führen eines vierten Luftstroms und eine weitere Lamellenanordnung aufweisen. Die weitere Lamellenanordnung kann zumindest zwei benachbart zueinander angeordnete Lamellen aufweisen, die sich in einem Übergangsbereich zwischen einer vierten Auslassöffnung des vierten Luftkanals und der zweiten Auslassöffnung in den zweiten, den dritten oder den vierten Luftkanal hinein erstrecken. Der erste und der vierte Luftkanal können beidseitig des zweiten Luftkanals angeordnet sein. Der erste und der vierte Luftstrom können gleichen Ursprung sein. Somit können der erste und der dritte Luftkanal einen aufgespaltenen Kaltweg eines Kühlgeräts darstellen.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Darstellung eines erfindungsgemäßen Kühlgeräts;
- Fig. 2: eine weitere Darstellung eines erfindungsgemäßen Kühlgeräts;
- Fig. 3: eine Darstellung einer erfindungsgemäßen Lamellenanordnung;
- Fig. 4: eine weitere Darstellung einer erfindungsgemäßen Lamellenanordnung; und
- Fig. 5: eine weitere Darstellung einer erfindungsgemäßen Lamellenanordnung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

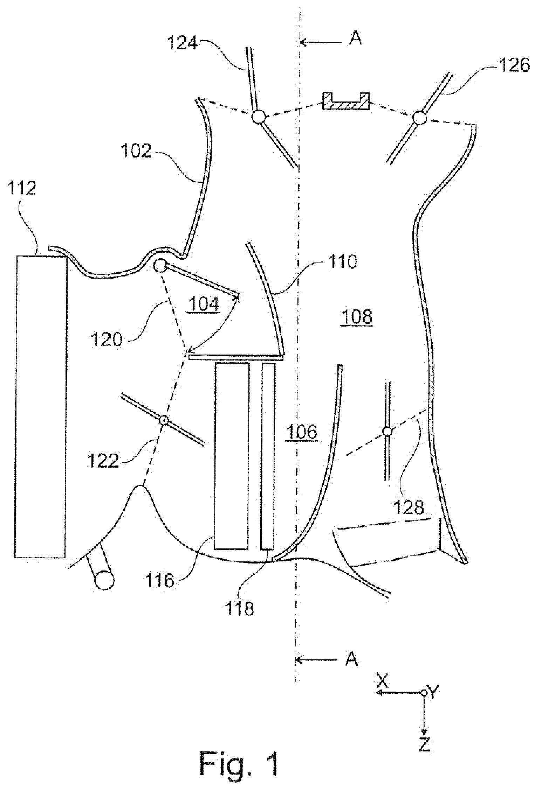

Fig. 1 zeigt eine Schnittdarstellung eines Kühlgeräts, gemäß einem Ausführungsbeispiel der vorliegenden Erfindung. Das Kühlgerät kann in einem Fahrzeug angeordnet sein. Dabei kann das Kühfgerät so ausgerichtet sein, dass die X-Achse der Fahrzeuglängsachse, die Z-Achse der Fahrzeughochachse und die Y-Achse der Fahrzeugquerachse entspricht. Das Kühlgerät weist eine Vorrichtung zur Mischung zweier Luftströme auf.

Das Kühlgerät weist ein Gehäuse 102 auf, das im Inneren eine Untergliederung aufweist, durch die ein erster Luftkanal 104, ein zweiter Luftkanal 106 und ein dritter Luftkanal 108 ausgebildet werden. Eine vordere und hintere Abdeckung oder Wand sind nicht gezeigt. Der erste Luftkanal 104 ist durch eine Trennwand von dem zweiten Luftkanal 106 abgetrennt. Somit verlaufen der erste Luftkanal 104 und der zweite Luftkanal 106 nebeneinander. Dabei wird der erste Luftkanal durch die Trennwand und einen gegenüberliegenden Wandabschnitt des Gehäuses 102 sowie zwei nicht gezeigte Seitenwände des Gehäuses gebildet. Der zweite Luftkanal wird durch die Trennwand und einen gegenüberliegenden weiteren Wandabschnitt des Gehäuses 102 sowie durch die zwei nicht gezeigten Seitenwände des Gehäuses 102 gebildet. Der dritte Luftkanal wird durch te des Gehäuses 102 anschließen, die den ersten Luftkanal 104 und den zweiten Luftkanal 106 begrenzen. Der dritte Luftkanal 108 stellt einen Raum dar, in dem der erste Luftkanal 104 und der zweite Luftkanal 106 münden. Luftströme durch den ersten Luftkanal 104 und den zweiten Luftkanal 106 verlaufen in einem Eingangsbereich der Luftkanäle 104, 106 zunächst parallel oder nahezu parallel. Ein Luftstrom durch den zweiten Luftkanal 106 wird in einem Endbereich des zweiten Luftkanals 106 durch einen Wandfortsatz des zweiten Luftkanals 106 so geleitet, dass er an einer Austrittsöffnung des zweiten Luftkanals 106 nahezu rechtwinklig auf einen aus einer Austrittsöffnung des ersten Luftkanals 104 strömenden Luftstrom trifft. Dabei vermischen sich die aus den Luftkanälen 104, 106 ausströmenden Luftströme in einem an die Austrittsöffnungen der Luftkanäle 104, 106 angrenzenden Bereich des dritten Luftkanals 108. Die Vermischung erfolgt somit insbesondere an einem Übergangsbereich, dort wo der erste Luftkanal 104 und der zweite Luftkanal 106 in den dritten Luftkanal 108 münden und anschließend aufeinandertreffen.

In dem Übergangsbereich ist eine Lamellenanordnung 110 angeordnet. Die Lamellenanordnung 110 weist eine Mehrzahl von Lamellen auf, die an der Trennwand zwischen dem ersten Luftkanal 104 und dem zweiten Luftkanal 106 befestigt sind. Die Lamellen erstrecken sich mit ihrem freien Ende in den dritten Luftkanal 108, in einen Endbereich des ersten Luftkanals 104 oder in einen Übergangsbereich zwischen dem ersten Luftkanal 104 und den dritten Luftkanal 108 hinein. Dabei erstreckt sich die Lamellenanordnung 110 nahezu parallel zu der Austrittsöffnung des ersten Luftkanals 104 und nahezu in Richtung des aus dem zweiten Luftkanal 106 ausströmenden Luftstroms. Dabei ist die Lamellenanordnung 110 an einem Endbereich der Trennwand zwischen dem ersten Luftkanal 104 und dem zweiten Luftkanal 106 befestigt und erstreckt sich nahezu rechtwinklig von der Trennwand weg. Somit versperrt die Lamellenanordnung 110 zumindest teilweise die Austrittsöffnung des zweiten Luftkanals 104. Dabei verbleibt zwischen den freien Enden der Lamellen der Lamellenanordnung 110 und einer angrenzenden Wand des Gehäuses 102 ein Freiraum. Somit kann der aus dem zweiten Luftkanal 104 ausströmende Luftsrom sowohl durch die Lamellenanordnung 110 hindurch als auch an der Lamellenanordnung 110 vorbei strömen und sich anschließend mit dem Luftstrom des zweiten Luftkanals 106 vermischen.

Alternativ sind andere geeignete Befestigungspunkte der Lamellenanordnung 110 möglich. Auch können weitere Luftkanale vorgesehen sein, die ebenfalls in den dritten Luftkanal 108 münden und in einem Übergangskanal zu einem anderen Luftkanal eine weitere Lamellenanordnung aufweisen. Beispielsweise können beidseitig des zweiten Luftkanals 106 zwei Kaltwege 104 verlaufen, so dass beidseitig des zweiten Luftkanals 106 jeweils eine Lamellenanordnung 110 angeordnet ist.

Gemäß diesem Ausführungsbeispiel weist das Kühlgerät ferner einen Verdampfer 112, einen Heizkörper 116, einen Zusatzheizkörer 118, beispielsweise einen PTC-Heizkörper, eine Kaltklappe 120, eine Warmklappe 122, eine Defrostklappe 124, eine Belüftungsklappe 126 und eine Fußraumklappe 126 auf. Der erste Luftkanal 104 stellt einen Kaltweg dar, in dem die Lamellen der Lamellenanordnung 110 angeordnet sind.

Über den Verdampfer 112 kann ein Luftstrom zugeführt werden, der anschließend auf den ersten Luftkanal 104 und den zweiten Luftkanal 106 aufgeteilt wird und diese durchströmen kann. Eine Durchflussmenge durch den ersten Luftkanal 104 kann durch die Kallklappe 120 gesteuert werden. Die Kaltklappe 120 kann einen Drehpunkt haben, der an die Wand des Gehäuses 102 angrenzt, Ein freies Ende der Kaltklappe 120 kann im geöffneten Zustand der Kaltklappe 120 in Richtung der Lamellenanordnung 110 zeigen. Auf diese Weise kann der Luftstrom durch den ersten Luftkanal 104 durch die Kaltklappe 120 auf die Lamellenanordnung 110 gerichtet werden. Eine Durchflussmenge durch den zweiten Luftkanal 106 kann durch die Warmklappe 120 gesteuert werden, In dem zweiten Luftkanal 106 durchströmt der Luftstrom nacheinander die Heizkörper 116, 118, Aus dem dritten Luftkanal 108 kann der Luftstrom schließlich über die Defrostklappe 124, die Belüftungsklappe 126 sowie die Fußraumklappe 126 ausströmen.

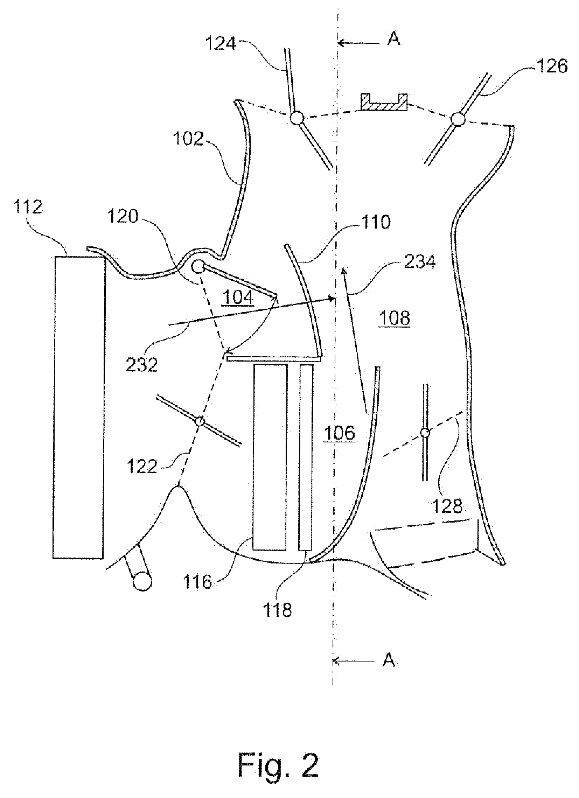

Fig. 2 zeigt eine weitere Schmttdarstellung des in Fig. 1 gezeigten Kühlgeräts, gemäß einem Ausführungsbeispiel der vorliegenden Erfindung. Mittels eines Pfeils ist ein Verlauf einer Luftströmung 232 durch den ersten Luftkanal 104 und durch die Lamellenanordnung 110 gezeigt. Die Lamellenanordnung 110 kann flache Lamellen aufweisen, die hier im Kaltweg, also dem Weg des Luftstroms 232, angeordnet sind. Mittels eines weiteren Pfeils ist ein Verlauf einer Luftströmung 234 aus dem zweiten Luftkanal 106 heraus gezeigt.

Die gezeigte Luftströmung 234 stellt virtuelle Warmkanäle nach oben hinter den Lamellen dar. Daraus ergibt sich, das keine Trennung seitlich hinter den Lamellen besteht. Dies sorgt für eine optimale Durchmischung. Auf diese Weise erreicht Warmluft die Defrostklappe 106. Da keine Absperrung des Warmweges besteht, ist die gezeigte Lösung druckabfalloptimiert. Lineare Regelkurven sind durch die Absperrung im Kaltweg möglich.

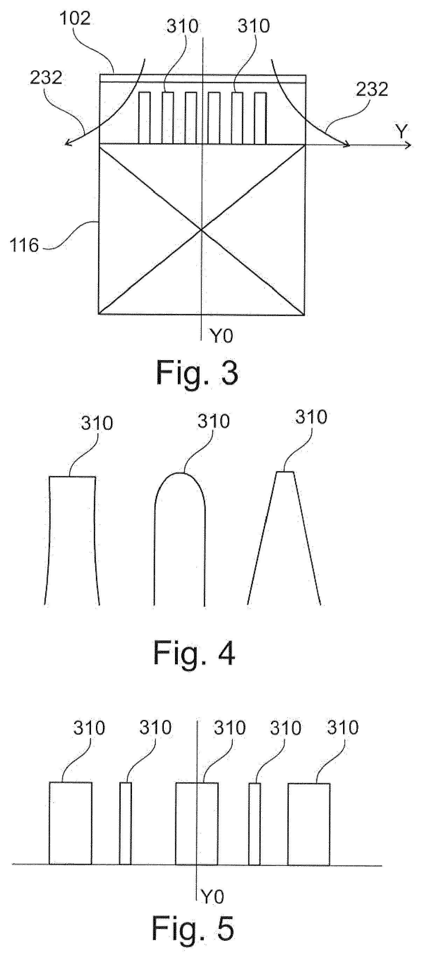

Fig. 3 zeigt einen Ausschnitt des in den Figuren 1 und 2 gezeigten Kühlgeräts entlang der in den Figuren 1 und 2 gezeigten Schnittlinie A-A. Dabei ist ein Bereich des Heizkörpers / PTC 116 mit der Trennwand zu dem ersten Luftkanal und daran befestigten Lamellen 310 der Lamellenanordnung gezeigt. Die Lamellen 310 sind in einer Reihe auf der Y-Achse oder parallel zu der Y-Achse aufgereiht. Die Lamellen 310 erstrecken sich in Richtung einer Wand des Gehäuses 102. Gemäß diesem Ausführungsbeispiel weist die Lamellenanordnung sechs Lamellen 310 auf. Alternativ kann die Lamellenanordnung auch mehr oder weniger Lamellen 310 aufweisen. Auch sind verschiedene Formen sowie Abmessungen für die Lamellen 310 möglich. Die Lamellen 310 bilden eine durch Schlitze unterbrochene Trennwand aus. Die Breite der Schlitze ist durch einen Abstand der Lamellen 310 zueinander bestimmt. Die Lammellenanordnung ist mittig über eine Breite des Kanals in Y-Richtung angeordnet. Dabei besteht ein Freiraum zu angrenzenden Seitenwänden des Kanals. Durch die Position in Y-Richtung und die Abstände zwischen benachbarten Lamellen 310, ist eine feine Optimierung der Auslasstemperaturen möglich. Gemäß diesem Ausführungsbeispiel ist mehr Freiraum seitlich der Lamellenanordnung für die Kaltluft in Richtung seitlicher Fußraumauslässe gegeben. Wie durch die Pfeile angedeutet strömt die Kaltluft 232 eher seitlich an der Lamellenanordnung 310 vorbei. Eine Zonentrennung erfolgt entlang der Linie Y0.

Fig. 4 zeigt beispielhaft Lamellen 310 einer Lamellenanordnung, wie sie in Fig. 3 gezeigt ist. Die einzelnen Lamellen 310 sind im Schnitt A-A gezeigt. Die Lamellen 310 weisen verschiedene Formen sowie Größen auf. Die links gezeigte Lamelle 310 weist eine rechteckige Form auf, die mittlere Lamelle 310 weist einen abgerundeten Endbereich und die rechts gezeigte Lamelle 310 eine sich verjüngende Form auf, wobei der Endbereich gerade ist. Gemäß unterschiedlichen Ausführungsbeispielen kann die Lamellenanordnung aus identischen Lamellen 310 oder aus unterschiedlichen Lamellen 310 aufgebaut sein.

Fig. 5 zeigt beispielhaft Lamellen 310 eines Gesamtsystems einer Lamellenanordnung, wie sie in Fig. 3 gezeigt ist. Die Lamellenanordnung weist gemäß diesem Ausführungsbeispiel fünf Lamellen 310 auf. Die Lamellenanordnung weist Lamellen 310 in zwei unterschiedlichen Größen auf. Dabei ist alternierend eine aus einem breiteren Streifen bestehende Lamelle 310 neben einer aus einem schmaleren Streifen bestehende Lamelle 310 angeordnet.

Die beschriebenen Ausführungsbeispiele sind nur beispielhaft gewählt und können miteinander kombiniert werden.

## Patentansprüche

1. Vorrichtung zur Mischung zweier Luftströme zur Temperierung eines Fahrzeugs, mit folgenden Merkmalen:
einem ersten Luftkanal (104) zum Führen eines ersten Luftstroms;
einem zweiten Luftkanal (106) zum Führen eines zweiten Luftstroms;
einem dritten Luftkanal (108) zum Aufnehmen des ersten Luftstroms aus einer ersten Auslassöffnung des ersten Luftkanals und des zweiten Luftstroms aus einer zweiten Auslassöffnung des zweiten Luftkanals; und
einer Lamellenanordnung (110), die zumindest zwei benachbart zueinander angeordnete Lamellen (310) aufweist, die sich in einen Übergangsbereich zwischen der ersten Auslassöffnung und der zweiten Auslassöffnung in einen der Luftkanäle (104, 106, 108) hinein erstrecken,
**dadurch gekennzeichnet, dass**
die Lamellenanordnung (110) unterschiedlich ausgeformte Lamellen (310) aufweist.

2. Vorrichtung gemäß Anspruch 1, bei der sich die Lamellen (310) ausgehend von einem Grenzbereich zwischen dem ersten Luftkanal (104) und dem zweiten (106) Luftkanal in den dritten Luftkanal (108) hinein erstrecken.

3. Vorrichtung gemäß einem der vorangegangenen Ansprüche, bei der die Lamellenanordnung (110) so angeordnet ist, dass die Lamellen (310) den ersten Luftkanal und/oder den ersten und den zweiten Luftkanal (104, 106) teilweise verschließen.

4. Vorrichtung gemäß einem der vorangegangenen Ansprüche, bei der die Lamellen (310) als formstabile Streifen ausgeformt sind.

5. Vorrichtung gemäß einem der vorangegangenen Ansprüche, bei der die Lamellenanordnung (110) in unterschiedlichen Abständen zueinander angeordnete Lamellen (310) aufweist.

6. Vorrichtung gemäß einem der vorangegangenen Ansprüche, mit einer Temperiereinrichtung (116, 118), die zum Temperieren des zweiten Luftstroms in dem zweiten Luftkanal (106) angeordnet ist.

7. Vorrichtung gemäß einem der vorangegangenen Ansprüche, mit einer Zuführeinrichtung zum Zuführen eines ersten Anteils eines gemeinsamen Eingangsluftstroms als den ersten Luftstrom in den ersten Luftkanal (104) und eines zweiten Anteils des gemeinsamen Eingangsluftstroms als den zweiten Luftstrom in den zweiten Luftkanal (106).

8. Vorrichtung gemäß einem der vorangegangenen Ansprüche, bei dem der dritte Kanal (108) zumindest einen Auslass (124, 126, 128) zum Auslassen eines aus dem ersten Luftstrom und dem zweiten Luftstrom erzeugten temperierten Luftstroms aufweist.

9. Vorrichtung gemäß einem der vorangegangenen Ansprüche, mit einem vierten Luftkanal zum Führen eines vierten Luftstroms und einer weiteren Lamellenanordnung, die zumindest zwei benachbart zueinander angeordnete Lamellen aufweist, die sich in einem Übergangsbereich zwischen einer vierten Auslassöffnung des vierten Luftkanals und der zweiten Auslassöffnung in den zweiten, den dritten oder den vierten Luftkanal hinein erstrecken.

## Claims

1. A device for mixing two air streams to control the temperature of a vehicle, having the following features:
a first air duct (104) for guiding a first air stream;
a second air duct (106) for guiding a second air stream;
a third air duct (108) for receiving the first air stream from a first outlet opening of the first air duct and the second air stream from a second outlet opening of the second air duct; and
a slat arrangement (110) with at least two adjacently arranged slats (310) extending into one of the air ducts (104, 106, 108) in a transition region between the first outlet opening and the second outlet opening, **characterised in that** the slat arrangement (110) has differently shaped slats (310).

2. The device according to claim 1, wherein the slats (310) extend into the third air duct (108) starting from a border region between the first air duct (104) and the second (106) air duct.

3. The device according to one of the preceding claims, wherein the slat arrangement (110) is arranged in such a way that the slats (310) partially close the first air duct and/or the first and the second air duct (104, 106).

4. The device according to one of the preceding claims, wherein the slats (310) are shaped as dimensionally stable strips.

5. The device according to one of the preceding claims, wherein the slat arrangement (110) has slats (310) arranged at different distances to one another.

6. The device according to one of the preceding claims, with a temperature control device (116, 118) arranged in the second air duct (106) for controlling the temperature of the second air stream.

7. The device according to one of the preceding claims, with a feeding device for feeding a first part of a common input air stream into the first air duct (104) as the first air stream and a second part of the common input air stream into the second air duct (106) as the second air stream.

8. The device according to one of the preceding claims, wherein the third duct (108) has at least one outlet (124, 126, 128) for letting out a temperature-controlled air stream generated from the first air stream and the second air stream.

9. The device according to one of the preceding claims, with a fourth air duct for guiding a fourth air stream and a further slat arrangement having at least two adjacently arranged slats extending into the second, the third or the fourth air duct in a transition region between a fourth outlet opening of the fourth air duct and the second outlet opening.

## Revendications

1. Dispositif pour le mélange de deux flux d'air servant à l'équilibrage de température d'un véhicule, ledit dispositif ayant les caractéristiques suivantes :
un premier conduit d'air (104) servant au guidage d'un premier flux d'air ;
un deuxième conduit d'air (106) servant au guidage d'un deuxième flux d'air ;
un troisième conduit d'air (108) servant à recevoir le premier flux d'air provenant d'une première ouverture de sortie du premier conduit d'air, et
servant à recevoir le deuxième flux d'air provenant d'une deuxième ouverture de sortie du deuxième conduit d'air ; et
un agencement de lamelles (110) qui présente au moins deux lamelles (310) disposées en étant voisines l'une de l'autre, lamelles qui, dans une zone de transition située entre la première ouverture de sortie et la deuxième ouverture de sortie, s'étendent à l'intérieur de l'un des conduits d'air (104, 106, 108),
**caractérisé en ce que** l'agencement de lamelles (110) présente des lamelles (310) formées de façon différente.

2. Dispositif selon la revendication 1, dans lequel les lamelles (310), à partir d'une zone limite située entre le premier conduit d'air (104) et le deuxième conduit d'air (106), s'étendent à l'intérieur du troisième conduit d'air (108).

3. Dispositif selon l'une des revendications précédentes, dans lequel l'agencement de lamelles (110) est disposé de manière telle, que les lamelles (310) ferment partiellement le premier conduit d'air et / ou le premier et le deuxième conduit d'air (104, 106).

4. Dispositif selon l'une quelconque des revendications précédentes, dans lequel les lamelles (310) sont configurées comme des bandes indéformables.

5. Dispositif selon l'une quelconque des revendications précédentes, dans lequel l'agencement de lamelles (110) présente des lamelles (310) disposées les unes par rapport aux autres en étant espacées suivant des intervalles différents.

6. Dispositif selon l'une quelconque des revendications précédentes, comprenant un dispositif d'équilibrage de température (116, 118) qui est disposé pour l'équilibrage de température du deuxième flux d'air dans le deuxième conduit d'air (106).

7. Dispositif selon l'une quelconque des revendications précédentes, comprenant un dispositif d'alimentation servant à fournir, dans le premier conduit d'air (104), une première partie d'un flux d'air d'entrée commun comme étant le premier flux d'air, et à fournir, dans le deuxième conduit d'air (106), une deuxième partie du flux d'air d'entrée commun comme étant le deuxième flux d'air.

8. Dispositif selon l'une quelconque des revendications précédentes, dans lequel le troisième conduit (108) présente au moins une sortie (124, 126, 128) prévue pour la sortie d'un flux d'air tempéré produit à partir du premier flux d'air et du deuxième flux d'air.

9. Dispositif selon l'une quelconque des revendications précédentes, comprenant un quatrième conduit d'air servant au guidage d'un quatrième flux d'air et comprenant un autre agencement de lamelles qui présente au moins deux lamelles disposées en étant voisines l'une de l'autre, lamelles qui, dans une zone de transition située entre une quatrième ouverture de sortie du quatrième conduit d'air et la deuxième ouverture de sortie, s'étendent à l'intérieur du deuxième, du troisième ou du quatrième conduit d'air.
